(19) Europäisches Patentamt
European Patent Office
Office européen des brevets

(11) **EP 1 016 236 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(51) Int Cl.⁷: **H04L 1/00**, H04L 1/18

(21) Anmeldenummer: **98948815.0**

(86) Internationale Anmeldenummer:
**PCT/DE98/02454**

(22) Anmeldetag: **21.08.1998**

(87) Internationale Veröffentlichungsnummer:
**WO 99/014883 (25.03.1999 Gazette 1999/12)**

(54) **SCHNELLE DECODIERUNG VON PARTIELL EMPFANGENEN FALTUNGSCODIERTEN DATEN**

RAPID DECODING OF PARTIALLY RECEIVED CONVOLUTION-CODED DATA

DECODAGE RAPIDE DE DONNEES CODEES PAR CONVOLUTION, PARTIELLEMENT RECUES

(84) Benannte Vertragsstaaten:
**DE FR GB IT**

(30) Priorität: **18.09.1997 DE 19741150**

(43) Veröffentlichungstag der Anmeldung:
**05.07.2000 Patentblatt 2000/27**

(73) Patentinhaber: **SIEMENS AKTIENGESELLSCHAFT**
**80333 München (DE)**

(72) Erfinder:
• **MEYER, Jan**
  **D-82362 Weilheim (DE)**
• **RAAF, Bernhard**
  **D-81475 München (DE)**

(56) Entgegenhaltungen:
**EP-A- 0 439 649**      **WO-A-96/13105**
**DE-A- 19 521 327**    **DE-C- 19 535 358**
**US-A- 5 446 747**

• **BERROU C ET AL: "NEAR OPTIMUM ERROR CORRECTING CODING AND DECODING: TURBO-CODES" IEEE TRANSACTIONS ON COMMUNICATIONS, Bd. 44, Nr. 10, Oktober 1996, Seiten 1261-1271, XP000629465**
• **NARAYANAN K R ET AL: "A NOVEL ARQ TECHNIQUE USING THE TURBO CODING PRINCPIPLE" IEEE COMMUNICATIONS LETTERS, Bd. 1, Nr. 2, März 1997, Seiten 49-51, XP000687091**

**Beschreibung**

Die vorliegende Erfindung betrifft ein Verfahren und eine Vorrichtung zur Verarbeitung von durch eine Sendeeinheit an eine Empfangseinheit übertragenen Nutzdaten gemäß dem Oberbegriff des Anspruchs 1 bzw. dem Oberbegriff des Anspruches 10.

Ein derartiges Verfahren und eine derartige Vorrichtung sind aus der deutschen Patentanmeldung 195 35 359.5 der Siemens AG bekannt. In dieser Anmeldung sind ein Verfahren und eine Vorrichtung zur Verarbeitung von durch eine Sendeeinheit an eine Empfangseinheit übertragenen Nutzdaten beschrieben, die durch einen Faltungs-Code mit zumindest zwei Erzeugungsgleichungen redundant codiert sind. Dabei ist eine Empfangseinrichtung zum Empfangen eines Teiles einer Gesamtmenge von redundant codierten Nutzdaten vorgesehen, wobei im Fall einer fehlerfreien Übertragung aus dem empfangenen Teil alle zu übertragenden Nutzdaten erhalten werden können. Eine Decodiereinrichtung dient zum Decodieren des empfangenen Teils der redundant codierten Nutzdaten, um alle zu übertragenden Nutzdaten zu erhalten, und eine Überprüfungseinrichtung dient zum Überprüfen der Qualität der erhaltenen Nutzdaten, wobei eine Fehlerkorrektur durchgeführt wird, wenn die Qualität nicht ausreichend ist. Die bekannte Vorrichtung bezieht sich auf die Übertragung von digitalen Daten, wobei als Decodiereinrichtung in aller Regel ein Viterbi-Decoder oder dergleichen verwendet wird, um die uncodierten Nutzdaten wieder herzustellen bzw. im Fall von Übertragungsfehlern mit größter Wahrscheinlichkeit zu schätzen. Die nicht empfangenen Bits der nicht empfangenen Nutzdaten werden dabei mit einem Softdecision-Wert bzw. einer Signifikanzinformation von Null versehen, so daß sie für die Decodierung nicht herangezogen werden.

Bei der bekannten Vorrichtung wird ein normaler Decoder verwendet, wie er auch für den Empfang vollständiger Nachrichten bzw. der jeweils zu übertragenden Gesamtmenge von Nutzdaten verwendet wird. Der Verarbeitungs- und Speicheraufwand ist dabei sehr aufwendig, wobei die bekannte Vorrichtung nicht in der Lage ist, nach dem Empfang eines Teils einer Gesamtmenge von redundant codierten Nutzdaten alle zu übertragenden Nutzdaten aus diesem Teil so rechtzeitig zu decodieren, daß vor dem Empfang des restlichen Teiles bekannt ist, ob die Decodierung erfolgreich war, oder ob der restliche Teil doch noch empfangen und decodiert werden muß, um die Gesamtnachricht bzw. alle zu übertragenden Nutzdaten erhalten zu können.

Eine neue automatische Wiederholungsanfragetechnik (automatic repeat request ARQ) basierend auf dem Turbocodierprinzip ist in dem Artikel "A Novel ARQ Technique using the Turbo Coding Principle", veröffentlicht in IEEE Communication letters, Band 1, Nr. 2, März 1997, Seiten 49-51 von Narayanan offenbart. Die Technik verwendet die protokollierten Wahrscheinlichkeitsraten (log-likelihood ratios) die von dem Decoder während einer vorangegangenen Übertragung erzeugt wurden als Ausganginformation, wenn weitere Übertragungen der selben Daten decodiert werden. Simulationsergebnisse zeigen eine signifikante Reduzierung der Frame Error Rate. Turbocodierung bezieht sich auf die parallele Verkettung von systematisch rekursiv gefalteten Codes (Recursive Systematic Convolutional RSC), bei denen die Datensequenz zunächst in einen RSC Codierer eingegeben wird, und dann bei der Verwendung eines pseudo-zufälligen Verschachtelers (Pseudorandom Interleaver) permutiert und von einem identischen RSC Codierer codiert wird.

Ein Turbodecoder besteht aus vielen identischen Stufen von Decodiermodulen. Jedes Modul wiederum besteht aus zwei Soft-Output Decodierern, die geeignet sind, Soft-Outputs anzunehmen und zu übergeben. Genauer gesagt kann die protokollierte Wahrscheinlichkeitsrate (log-likelihood ratio LLR), die von einem Maximum a posteriori (MAP) Decoder ausgegeben für jedes Bit wird, als $L(dk) = L_{sys} + L_{parity} + L_{ext}$ geschrieben werden, wobei $L_{sys}$ der Anteil des systematischen Bits zur Zeit k, $L_{parity}$ der Anteil aller anderen systematischen Bits mit Ausnahme des einen zur Zeit k ist, und alle Parity-Bits des einen Codierers für das Informationsbit zur Zeit k auf den von dem Codierer gesetzten Rahmenbedinungen basieren. $L_{ext}$ ist die extrinsische Information, die von dem anderen MAP Decodierer zur Verfügung gestellt wird. Analog zu $L_{parity}$ ist $L_{ext}$ zur Zeit k die Verteilung aller systematischen Bits mit Ausnahme des einen zum Zeitpunkt k und von allen Parity-Bits des anderen Codierers zu dem Informationsbit zur Zeit k, basierend auf den Beschränkungen des Codes. $L_{parity}$ wird dann im nächsten Decoder als $L_{ext}$ verwendet, was zu einem iterativen Aufbau führt.

Wenn Daten in Form von Paketen übertragen werden, ist es üblich, automatische Wiederholungsanfragen (automatic repeat request ARQ) oder Wiederübertragungsschemata zu verwenden. Wann auch immer ein Paket als falsch decodiert betrachtet wird (z.B. basierend auf der Prüfung eines zyklischen Redundanz-Code Tests (cyclic redundancy code (CRC) check)), beantragt der Empfänger eine Wiederübertragung des Paketes, bis das Paket als korrekt decodiert erachtet wird. Eine andere Technik ist die Verbindung von Codes oder das Typ III ARQ Schema, bei dem während einer ersten Übertragung ein unterbrochener Code verwendet wird, und die unterbrochenen Bits mit der Wiederübertragung übertragen werden. Der Empfänger kombiniert dann die beiden Pakete, die zusammen den ununterbrochenen Code ergeben.

Gemäß dieser Veröffentlichung wird, wann auch immer ein Paket als fehlerhaft erachtet wird, eine negative Bestätigung an den Codierer geschickt und die LLRs für jedes Bit werden gespeichert. Wenn eine Wiederübertragung empfangen wird, werden diese LLRs als Ausgangsinformation während der Decodierung des Pakets verwendet. Die Turbocodierung fährt dann auf iterative Weise fort, bis das Paket als korrekt decodiert erachtet wird.

Die Aufgabe der vorliegenden Erfindung ist damit, ein Verfahren und eine Vorrichtung zur Verarbeitung von durch eine Sendeeinheit an eine Empfangseinheit übertragenen Nutzdaten gemäß dem Oberbegriff des Anspruches 1 bzw. dem Oberbegriff des Anspruches 11 bereitzustellen, durch die nach dem Empfang eines Teils einer Gesamtmenge von redundant codierten Nutzdaten rechtzeitig festgestellt werden kann, ob der Empfang der restlichen zu übertragenen Nutzdaten noch notwendig ist, oder ob der Empfang der restlichen Nutzdaten nicht mehr durchgeführt werden muß.

Diese Aufgabe wird durch ein Verfahren gemäß dem Anspruch 1 und eine Vorrichtung gemäß dem Anspruch 11 gelöst.

Die vorliegende Erfindung ermöglicht es damit, eine Nachricht nach dem Empfang eines Teils der Nachricht so schnell zu decodieren, daß die Information über den Erfolg der Decodierung folgsfall der Empfang und/oder die Decodierung der restlichen Nutzdaten unterdrückt werden, so daß eine starke Verringerung und Einsparung des Verarbeitungs- bzw. Empfangsaufwandes erreicht wird. Insbesondere bei der Anwendung der vorliegenden Erfindung auf akku- oder batteriebetriebene Mobiltelefone kann hierbei eine starke Stromersparnis erreicht werden, wodurch die Stand-by-Zeit bedeutend verlängert wird. Eine entsprechend der vorliegenden Erfindung aufgebaute und betriebene Decodiereinrichtung benötigt nur einen Bruchteil der Verarbeitungsleistung der bisher verwendeten Decodiereinrichtungen, wie zum Beispiel des Viterbi-Decoders und benötigt auch weniger Speicherplatz. Der Verarbeitungsaufwand für die erfindungsgemäße Decodiereinrichtung beträgt nur etwa 1/20 als bei herkömmlichen Decodiereinrichtungen. Bei der Anwendung der vorliegenden Erfindung in einem GSM-Mobilfunktelefon, wobei beispielsweise Steuerdaten in vier Datenpaketen übersendet werden, erzeugt die erfindungsgemäße Decodiereinrichtung nach dem Empfang und Decodieren nach dem zweiten von vier zu empfangenen Datenpaketen selbst unter schwierigen Übertragungsbedingungen keine größere Blockfehlerrate als ein Viterbi-Decoder.

Vorteilhafte Ausgestaltungen der vorliegenden Erfindung sind in den jeweiligen Unteransprüchen angegeben.

Vorteilhafterweise werden dabei bei der rekursiven Anwendung der zumindest einen Erzeugungsgleichung beim Decodieren erste Softdecision-Werte ermittelt, die zur Korrektur wahrscheinlich fehlerhafter Nutzdaten verwendet werden, wenn die Qualität der erhaltenen Nutzdaten nicht ausreichend ist.

Weiterhin weisen die zu übertragenen Nutzdaten vorteilhafterweise definierte Anfangs- und End-Zustände auf, wobei die gleichen Erzeugungsgleichungen nochmals auf den empfangenen Teil der Nutzdaten in der anderen Richtung rekursiv angewendet wird und dabei zweite Softdecision-Werte ermittelt, die sich jeweils entsprechend den ersten und zweiten Softdecision-Werten verglichen und die jeweils wahrscheinlich richtigeren Nutzdaten ausgewählt werden.

In einer anderen Variante weisen die zu übertragenen Nutzdaten ebenfalls definierte Anfangs- und End-Zustände auf, wobei, wenn die Qualität der erhaltenen Nutzdaten nicht ausreichend ist, zumindest ein Teil derjenigen beim Decodieren erhaltenen Nutzdaten, die den definierten Anfangs- und/oder End-Zuständen der zu übertragenen Nutzdaten entsprechen, mit den entsprechenden Anfangs- bzw. End-Zuständen verglichen werden, um ein Fehlermuster zu ermitteln, daß zur Korrektur von Fehlern in den erhaltenen Nutzdaten verwendet wird.

Vorteilhafterweise erfolgt die Überprüfung der Qualität der erhaltenen Nutzdaten mittels einer in den erhaltenen Nutzdaten enthaltenen Prüfsumme. Dabei kann von den erhaltenen Nutzdaten diejenige Nutzdateneinheit mit dem schlechtesten ermittelten Softdecision-Wert korrigiert werden, wenn in der Prüfsumme ein Fehler auftritt. Tritt dabei in der Prüfsumme beim nochmaligen Überprüfen immer noch ein Fehler auf, so kann diejenige Nutzdateneinheit mit dem zweitschlechtesten ermittelten Softdecision-Wert korrigiert werden, usw.

Vorteilhafterweise wird der empfangene Teil der redundant codierten Nutzdaten ohne.seine Prüfsumme decodiert, woraufhin. seine Prüfsumme berechnet, mit dem entsprechenden Faltungscode codiert und mit der codierten Prüfsumme verglichen wird, um die Qualität der erhaltenen Nutzdaten zu überprüfen.

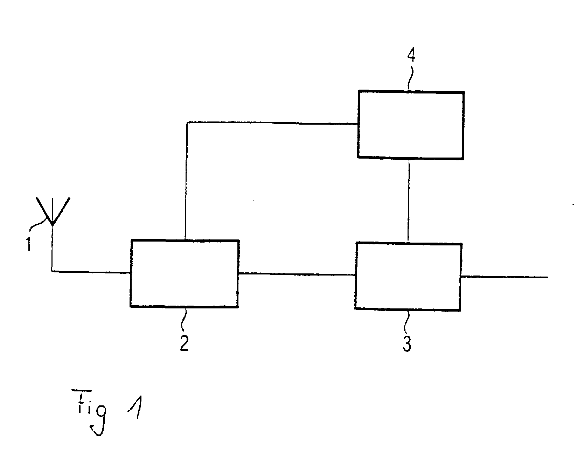

Die vorliegende Erfindung wird anhand eines bevorzugten Ausführungsbeispieles unter Bezug auf die einzige Figur 1 näher erläutert.

Fig. 1 zeigt eine erfindungsgemäße Vorrichtung zur Verarbeitung von durch eine Sendeeinheit an eine Empfangseinheit übertragenen Nutzdaten mit einer Antenne 1, einer Empfangseinrichtung 2, einer Decodiereinrichtung 3 und einer Überprüfungseinrichtung 4. Die Überprüfungseinrichtung 4 ist dabei sowohl mit der Empfangseinrichtung 2 als auch der Decodiereinrichtung 3 verbunden und gibt ein Signal an die Empfangseinrichtung 2 und/oder die Decodiereinrichtung 3 aus, wenn aus dem empfangenen Teil der Nutzdaten alle zu übertragenen Nutzdaten in ausreichender Qualität erhalten wurden und der Empfang bzw. das Decodieren der restlichen Nutzdaten nicht mehr notwendig ist. In diesem Fall werden die Empfangseinrichtung 2 und/oder die Decodiereinrichtung abgeschaltet. Das im folgenden erläuterte Ausführungsbeispiel der vorliegenden Erfindung bezieht sich auf die Übertragung digitaler Daten im GSM-System. In diesem Fall kann in der in Fig. 1 gezeigten Vorrichtung zwischen der Empfangseinrichtung 2 und der Decodiereinrichtung 3 eine De-Interleaving-Vorrichtung angeordnet sein.

Es wird hier zunächst die Faltungs-Codierung der Nachricht erläutert, in Anlehnung an die Nomenklatur gem. GSM 05.03 Sec. 4.1:

Zu übertragen ist eine Nachricht bestehend aus 224 uncodierten Bits:

$$u(k) = \{0,1\} \text{ für } k = 0, 1, ..., 223$$

Diese Nachricht wird um 4 festgelegte Bits erweitert, um den Faltungs-(De)-Coder, bzw. im vorliegenden Fall die Decodiereinrichtung 3 in einen definierten Endzustand zurückzubringen:

$$u(k) = 0 \text{ für } k = 224, 225, 226, 227$$

Diese erweiterte Nachricht wird in den Faltungscoder gegeben, der die doppelte Anzahl an codierten Bits c (n) ausgibt, d. h. 100 % Redundanz hinzufügt. Die Redundanz wird bei schwierigen Übertragungsbedingungen zur Korrektur von Übertragungsfehlern verwendet:

$$c(2k) = u(k) + u(k - 3) + u(k - 4)$$

$$c(2k+1) = u(k) + u(k - 1) + u(k - 3) + u(k - 4)$$

$$\text{für } k = 0, 1, ..., 227$$

wobei gilt:

$$u(k) = 0 \text{ für } k = -4, -3, -2, -1$$

was bedeutet, daß der Faltungscoder einen definierten Anfangszustand hat.
Die Addition von 'Bits' geschieht dabei mit Modulo-2 Arithmetik, d. h.

$$0 + 0 = 0; \qquad 1 + 0 = 1; \qquad 1 + 1 = 0.$$

Es entsteht also die doppelte Anzahl an codierten Bits gegenüber den uncodierten:

$$c(n) = \{0,1\} \text{ für } n = 0, 1, ..., 455$$

Diese codierten Bits werden beispielsweise in vier Paketen übertragen (die möglicherweise fehlerhaft übertragenen Bits werden auf der Empfangsseite mit c'(n) bezeichnet):

$$\text{im 1. Paket die c'(n) für } n = 0, 4, 8, ..., 452$$

$$\text{im 2. Paket die c'(n) für } n = 1, 5, 9, ..., 453$$

$$\text{im 3. Paket die c'(n) für } n = 2, 6, 10, ..., 454$$

$$\text{im 4. Paket die c'(n) für } n = 3, 7, 11, ..., 455$$

Nach der Erläuterung der GSM-Empfehlung, wird nun die erfindungsgemäße Decodiereinrichtung erklärt.
Ihre Aufgabe ist es, möglichst schnell und fehlerfrei aus den ersten beiden übertragenen Paketen die Nachricht u'(k) für k = 0,1, ... 223 zu decodieren. Bekannt sind also alle c'(n) für n = 0, 1, 4, 5, 8, 9, ..., 448, 449, 452, 453.

Damit ist es sehr einfach möglich, alle u'(k) für k = -1, 1, 3, 5, 7, ..., 225 zu ermitteln:

Subtrahiert man die beiden Erzeugungsgleichungen für die c(n) voneinander, so erhält man direkt die Gleichung zur Ermittlung der genannten u'(k) aus den bekannten c'(n):

$$c(2k) - c(2k+1) = u(k-1)$$

Diese Gleichung läßt sich anwenden, um alle u'(k) für k = 0, 1, ...,223 zu ermitteln, wenn alle c'(n) für n = 0, 1, ...,449 bekannt sind, also alle (vier) Pakete der codierten Nachricht empfangen wurden. Ein Code, der eine so einfache Decodierung im fehlerfreien Fall zuläßt, ist auch als "Quick Look in Code" bekannt, bzw. diese Decodiermethode als "Quick Look in Decodierung". Bei Modulo-2 Arithmetik ist ferner "+" dasselbe wie "-".

Die "Quick Look in Decodierung" kann für den erfindungsgemäßen Decoder nur auf die Bits angewendet werden, die aus den ersten beiden Paketen bekannt sind. Die folgenden Bits der uncodierten Nachricht können nun also für den Decoder als bekannt angenommen werden:

$$u'(k) = c' (2k-2) + c'(2k-1) \text{ für } k = -1, 1, 3, 5, 7,$$

$$..., 225$$

da die codierten Bits auf der rechten Seite dieser Gleichung für die genannten k ausschließlich im ersten und zweiten Paket enthalten sind.

Der Kern der erfindungsgemäßen Decodiereinrichtung ist nun die rekursive Anwendung der umgestellten Erzeugungsgleichung für die codierten Bits. Die erste Erzeugungsgleichung:

$$c(2k) = u(k) + u(k-3) + u(k-4)$$

wird äquivalent umgestellt und kann mit ausschließlich bekannten Bits (bzw. inzwischen bekannt gewordenen, also rekursiv) angewendet werden, um die restlichen bisher unbekannten Bits der uncodierten Nachricht zu ermitteln:

$$u'(k)=c'(2k) + u'(k-3) + u'(k-4) \text{ für } k=0, 2, 4, ..., 226$$

Es ist auch möglich, die zweite Erzeugunsgleichung dazu heranzuziehen, sie ist jedoch umständlicher, da sie auf einen Eingangswert mehr zurückgreift. Dieser wurde zuvor mit Hilfe der ersten Erzeugungsgleichung durch "Quick Look In" ermittelt und enthält daher keine neue Information oder nutzbare Redundanz.

Somit ist mit einer sehr einfachen Berechnung in Modulo-2 Arithmetik die uncodierte Nachricht für den fehlerfreien Fall decodiert.

Unter Einbeziehung von Softdecisionwerten ist jedoch der bekannte Viterbi-Decoder in der Lage, wenige Fehler bei der Übertragung der codierten Bits zu korrigieren. Möglichkeiten, dies bei dem erfindungsgemäßen Decoder ebenfalls zu realisieren, wurden entwickelt:

Die erste Möglichkeit dazu besteht darin, beim "Quick Look In" und bei der Rekursion Softdecisionwerte für die decodierten Bits zu ermitteln, dann die Rekursion rückwärts bzw. in der anderen Richtung wiederum mit Ermittlung von Softdecisionwerten anzuwenden, und dann die beiden Softdecisionwerte je zu decodierendem Bit - falls nicht übereinstimmend - gegeneinander abzuwägen, d.h. das "wahrscheinlich richtigere" auszuwählen.

Die Rückwärtsrekursion geht ebenfalls aus der ersten Erzeugungsgleichung durch äquivalente Umwandlung hervor:

$$u'(k)=c'(2k+8) + u'(k+4) + u'(k+1) \text{ für } k= 222, 220, 218,$$

$$..., 2, 0, -2, -4$$

Die Ermittlung von Softdecisionwerten für die decodierten Bits geschieht dabei für jede Anwendung einer Gleichung mit Modul-2 Additionen (XOR-Verknüpfungen) nach dem Prinzip "Schwächstes Glied in der Kette". Bei jeder Anwendung einer "Quick Look In"- bzw. Rekursionsgleichung erhält das ermittelte Bit den minimalen unter den Bits auf der rechten Seite der Gleichung auftretenden Softdecisionwert.

Die Korrekturfähigkeit bei dieser Decodierungsmethode resultiert aus der (geringen) Restredundanz, die in den bekannten Anfangs- und Endzuständen des Codierers bestehen (s.o). Die Vorwärtsrekursion nutzt dabei den Anfangszustand als Startzustand, und die Rückwärtsrekursion nutzt den Endzustand für ihren Start.

Ein Vorteil dieser Methode ist auch, daß auf sehr einfache Weise Softdecisionwerte für die decodierten Bits ermittelt werden und möglicherweise in einer weiteren nachgeschalteten Decodiereinrichtung genutzt werden könnten. Die Ermittlung von Softdecisionwerten für die decodierten Bits ist bei einem Viterbi-Decoder mit erheblichem Zusatzaufwand verbunden.

Die zweite Möglichkeit ist, durch Vergleich der bei der Decodierung mit der Vorwärtsrekursion ermittelten Bits u'(224) und u'(226) mit den festgelegten Bits u(224)=u(226)=0 ein Syndrom bzw. ein Fehlermuster zu ermitteln, das nähere Informationen über die mögliche(n) Fehlerpositionen gibt. Aufgrund der Rekursion pflanzen sich Fehler in den Bits c'(n) mit einem bestimmten periodischen Muster fort, abhängig davon, in welcher Untergruppe der Bits c'(n) der oder die Fehler aufgetreten sind. Einen kurzen Abschnitt dieses Musters stellen dann die Bits u'(224) und u'(226) dar.

Für einen Einzelfehler gibt das Syndrom an, in welcher der Gruppen von c'(n)(für n=0, 4, 8, ..., 452) bzw. (für n=1, 9, 17, ..., 449) bzw. (für n=5, 13, 21, ..., 453) der Fehler liegt. Um einen Einzelfehler zu korrigieren, kippt man das Bit in der entsprechenden Gruppe, das innerhalb der Gruppe den geringsten (also "unsichersten") Softdecisionwert hat.

Für Mehrfachfehler kommen pro Syndrom auch nur bestimmte Kombinationen in Frage. Aus allen diesen Kombinationen (Einzelfehler, Doppelfehler, ...n-fach-Fehler) ist dann die Gruppe von Bits zur Korrektur auszuwählen, die am wahrscheinlichsten falsch ist. Die Fehlerwahrscheinlichkeit für die Bitgruppe ist das Produkt der Einzelbitfehlerwahrscheinlichkeiten. Da ein Softdecisionwert in gängigen Implementierungen üblicherweise als negativer Logarithmus der Bitfehlerwahrscheinlichkeit dargestellt wird, ist der 'Softdecisionwert' für die Bitgruppe gleich der Summe der Softdecisionwerte der Einzelbits. Zu korrigieren ist demnach die Bitgruppe mit der.geringsten Softdecision-Summe (Einzelfehler eingeschlossen).

Dieses Verfahren wurde für Korrektur von bis zu zwei Fehlern in den zwei Paketen als Simulationsmodell implementiert und zeigte unter schwierigen Kanalbedingungen dieselbe Leistungsfähigkeit in Bezug auf fehlerfreie Nachrichtendecodierung, wie der Viterbi-Decoder.

Die Methode kann natürlich genauso für die Rückwärtsrekursion angewendet werden. In diesem Fall wird das Syndrom dann aus den Bits u'(-2) und u'(-4) gebildet (das ist der Grund dafür, daß oben meist Intervalle für u(k) angegeben wurden, die den Bereich 0, 1, 2, ..., 223 überschreiten).

Die Bits u'(-1) und u'(225), die durch den "Quick Look In" ermittelt werden können, sind ursprünglich (beim Sender als Anfangs- und Endzustand) bereits als u(-1) = u(225) = 0 festgelegt (s.o.). Dies bietet eine weitere Möglichkeit der Fehlerkorrektur in einzelnen Bits c'(n): u'(-1) = 0 gilt bei "Quick Look In" genau dann, wenn gilt: c'(0) = c'(1). Wenn das nicht erfüllt sein sollte, so ist das c(n), n = 0, 1 zu kippen, das den geringeren Softdecisionwert von beiden hat. Analog kann mit c'(452) und c'(453) verfahren werden. Diese Korrektur ist natürlich vor der Rekursion durchzuführen. Der zusätzliche Gewinn dadurch ist gering, da nur Fehler in den genannten 4 Bits von 228 übertragenen korrigiert werden könne. Es kostet jedoch kaum Zusatzaufwand.

Im Fall der Übertragung von Signalisierungsnachrichten im GSM-System ist die Nachricht u(k) durch einen Blockcode zur Fehlererkennung geschützt. Die Überprüfungseinrichtung 4 erkennt Fehler in der eigentlichen Nachricht mittels diesem Blockcode (Prüfsumme) äußerst sicher und bietet daher die Möglichkeit, eine schnelle Aussage über den Erfolg der jeweiligen Decodierung mit der erfindungsgemäßen Decodiereinrichtung zu erhalten. Die eigentliche Nachricht umfaßt dabei die Bits u(k) für k = 0, 1, 2, ..., 183, während für k = 184, 185, 186, ..., 223. eine Prüfsumme darüber übertragen wird. Die Methode der Mehrfachfehlerkorrektur der Gruppe mit der geringsten Softdecisionsumme kann anstatt des Syndroms u'(224), u'(226) auch mit der Prüfsumme betrieben werden.

Die Vorgehensweise ist folgende: Falls die Prüfsumme einen Fehler anzeigt, werden die Bits c(n) in Reihenfolge der Softdecision-Information geordnet. Im ersten Schritt wird dasjenige Bit mit der "unsichersten" Softdecision-Information invertiert und die Decodierung erfolgreich beendet, ansonsten wird als nächstes das nächst-"unsichere Bit" c(k) invertiert und das Verfahren wiederholt. Dieses Vorgehen wird nicht nur für Einfach-Fehler, sondern auch für Doppel-..n-fach-Fehlerkorrekturen angewandt, wobei man die Reihenfolge, wie im o.g. Verfahren nach abnehmender Wahrscheinlichkeit durchführt. Das Verfahren wird so lange fortgesetzt, bis die Nachricht korrekt decodiert wurde, oder bis eine selbstgesetzte Grenze an Versuchen erreicht ist.

Nachteilig an diesem Verfahren ist, daß bei Zwei- und Mehrfehler-Korrekturen die Anzahl der durchzuführenden Decodierversuche schnell ansteigt und bald ein praktisches Maß überschreitet. Für kleinere n und bei Einsatz schneller DSPs könnte diese Methode jedoch in Zukunft anwendbar sein.

Da hierbei eine Redundanz verwendet wird, die in der Nachricht u(k) für k = 0, 1, 2, ..., 233 selbst begründet liegt, und dem (Viterbi-/Quick-)Faltungsdecoder oder der erfindungsgemäßen Decodiereinrichtung nicht bekannt ist, dürfte noch eine Verbesserung der Leistungsfähigkeit zu erwarten sein.

Für die zuletzt vorgeschlagene Methode kann die Reihenfolge zwischen Prüfen und (De-)codieren der Prüfsumme auch vertauscht werden, um etwas Aufwand zu sparen:

Die Nachricht u'(k) für 0, 1, 2, ..., 183 wird mit "Quick Look In" und Vorwärtsrekursion ermittelt. Anschließend wird, analog zum Block-Coder im Sender, die Prüfsumme dafür berechnet, hier u''(k) für k = 184, 185, 186, ..., 223 genannt. Die Prüfsumme wird danach, wiederum analog zum Vorgehen im Sender, faltungscodiert, so daß die Bits c''(n) für n = 368, 369, 372, 373, 376, 377, ..., 452, 453 entstehen und zur Überprüfung der Prüfsumme nur mit den entsprechenden c'(n) verglichen werden müssen.

Dies entspricht einer Umformulierung des Block-Coders von den u-Bits auf die c-Bits. Die erwarteten Bits c'' (n) für n = 368, 369, .. 372, 373, 376, 377, ..., 452, 453 können aus den Bits c'(n) für n = 1 ... 365 durch eine bitweise Matrixoperation berechnet werden, das ist das allgemeine (bekannte) Prinzip der Bildung von Blockcodes.

Der in GSM verwendete Block-Code hat die Eigenschaft, daß er Bündelfehler (Fehler betrifft bis zu 11 aufeinanderfolgende Bits, ist aber auf diesen Bereich lokalisiert) in den u-Bits sehr effizient korrigieren kann. Nach Anwendung des Faltungsdecoders auf alle 4 empfangenen Bursts, treten Fehler sehr wahrscheinlich als solche Bündelfehler auf. Bei Anwendung des Decoders auf 2 Bursts ist das aber nicht der Fall. Bei einzelnen, nicht detektierten Fehlern in den c-Bits treten hier in den u-Bits lange Ketten von Fehlern auf, die mit dem Blockcode nicht korrigiert (nur detektiert) werden können.

Durch die Umformulierung des Blockcodes auf die c-Bits, können mit an sich bekannten Verfahren (Berechnung eines Syndroms) einzelne Bitfehler in den c-Bits korrigiert werden. Die Erfindung liegt hier in der Idee, den Blockcode "umzuformulieren" und an einer anderen Stelle als vorgesehen zu verwenden, da er unter den hier vorliegenden, beim Design des Codes nicht berücksichtigten, Umständen an dieser Stelle eine bessere Performance aufweist. Im Gegensatz zu den o.g. Verfahren wird hierbei keine Softdecision-Information, sondern nur Harddecision-Information (wie im GSM standardmäßig für den Blockcode.) eingesetzt.

Weiterhin ist ein höherer Gewinn ohne große Gefahr der Falschkorrektur erzielbar, wenn die Softdecisionwerte des erfindungsgemäßen Decoders einem Blockdecoder zugeführt werden, der diese optimal verarbeiten kann. Das erhöht den Verarbeitungsaufwand jedoch.

Idealerweise sollte zur optimalen Decodierung der Fall 'Empfang der ersten zwei von vier Paketen' bei dieser Codierungsanordnung den nur mit minimaler Restredundanz vertretenen Faltungscode und den Blockcode zu einem gemeinsamen Blockcode zusammengefaßt und unter Einbeziehung der Softdecisionwerte decodiert werden.

Die beschriebenen Methoden lassen sich vollkommen analog verwenden auf den Fall 'Empfang der letzten beiden von vier Paketen'.

Für alle übrigen vier Fälle des 'Empfang von zwei von vier Paketen' ist die Rekursion allein anzuwenden, ohne "Quick Look In". Falls das erste und vierte oder das zweite und dritte Paket zu decodieren sind, so muß die Rekursion mit der entsprechend umgestellten ersten und zweiten Erzeugungsgleichung von Bit zu Bit alternierend durchgeführt werden.

Die Methoden bleiben nahezu dieselben, der Zweck 'Decodierung nach Empfang von zwei Paketen mit Option zur Decodierung nach vier Paketen im Fall des Mißerfolgs' wird jedoch nur mit den ersten beiden Paketen erreicht.

## Patentansprüche

1. Verfahren zur Verarbeitung von durch eine Sendeeinheit an eine Empfangseinheit eines Mobiltelefons übertragenen Nutzdaten, die durch einen Faltungscode mit zumindest zwei Erzeugungsgleichungen redundant codiert sind, und bei dem die redundant codierten Nutzdaten sequentiell in Paketen übertragen werden, mit den Schritten

   - Empfangen eines Teils einer Gesamtmenge von redundant codierten Nutzdaten, wobei im Fall einer fehlerfreien Übertragung aus dem empfangenen Teil alle zu übertragenden Nutzdaten erhalten werden können,
   - Decodieren des empfangenen Teils der redundant codierten Nutzdaten zum Erhalten aller zu übertragenden Nutzdaten,
   - Überprüfen der Qualität der erhaltenen Nutzdaten, und
   - Durchführung einer Fehlerkorrektur, wenn die Qualität der erhaltenen Nutzdaten nicht ausreichend ist,

   **dadurch gekennzeichnet,**
   **daß** das Verfahren weiter den Schritt

   - Unterdrückung des Empfangs weiterer redundant codierter Nutzdaten, wenn die Qualität der erhaltenen Nutzdaten ausreichend ist,

   aufweist, und
   **daß** beim Decodieren des empfangenen Teils der redundant codierten Nutzdaten zunächst ein Teil der Nutzdaten durch Einsetzen des empfangenen Teils der redundant codierten Nutzdaten in die Erzeugergleichungen gewonnen wird, und die übrigen Nutzdaten durch Umstellen und rekursives Anwenden zumindest einer der Erzeugungsgleichungen mit dem bereits gewonnenen Teil der Nutzdaten erhalten werden.

2. Verfahren zur Verarbeitung von Nutzdaten gemäß Anspruch 1,
   **dadurch gekennzeichnet,**
   **daß** die zu übertragenden Nutzdaten definierte Anfangs- und Endzustände aufweisen, und
   **daß** bei der rekursiven Anwendung der zumindest einen Erzeugungsgleichung beim Decodieren ausgehend vom Anfangszustand erste Softdecisionwerte ermittelt werden, die zur Korrektur wahrscheinlich fehlerhafter Nutzdaten verwendet werden, wenn die Qualität der erhaltenen Nutzdaten nicht ausreichend ist.

3. Verfahren zur Verarbeitung von Nutzdaten gemäß Anspruch 2,
   **dadurch gekennzeichnet,**
   **daß** die zu übertragenden Nutzdaten definierte Anfangs- und Endzustände aufweisen, und
   **daß** die gleiche Erzeugungsgleichung nochmals auf den empfangenen Teil der Nutzdaten ausgehend vom Endzustand rekursiv angewendet wird und dabei zweite Softdecisionwerte ermittelt, und
   **daß** die sich jeweils entsprechenden ersten und zweiten Softdecisionwerte verglichen und die jeweils wahrscheinlich richtigeren Nutzdaten ausgewählt werden.

4. Verfahren zur Verarbeitung von Nutzdaten gemäß Anspruch 1, 2 oder 3,
   **dadurch gekennzeichnet,**
   **daß** die zu übertragenden Nutzdaten definierte Anfangs- und Endzustände aufweisen, und daß, wenn die Qualität der erhaltenen Nutzdaten nicht ausreichend ist, zumindest ein Teil derjenigen beim Decodieren erhaltenen Nutzdaten, die den definierten Anfangs- und/oder Endzuständen der zu übertragenden Nutzdaten entsprechen, mit den entsprechenden Anfangs- bzw. Endzuständen verglichen werden, um ein Fehlermuster zu ermitteln, das zur Detektion und/oder Korrektur von Fehlern in den empfangenen codierten Nutzdaten verwendet wird.

5. Verfahren zur Verarbeitung von Nutzdaten gemäß Anspruch 4,
   **dadurch gekennzeichnet,**
   **daß** das ermittelte Fehlermuster eine Untergruppe der empfangenen codierten Nutzdaten angibt, in der ein oder mehrere Fehler vorhanden sind, und zur Fehlerkorrektur in der Untergruppe diejenige Nutzdateneinheit mit dem schlechtesten ermittelten Softdecisionwert oder diejenigen Nutzdateneinheiten mit der schlechtesten Softdecisionwertsumme korrigiert werden.

6. Verfahren zur Verarbeitung von Nutzdaten gemäß einem der vorhergehenden Ansprüche,
   **dadurch gekennzeichnet,**
   **daß** die Überprüfung der Qualität der erhaltenen Nutzdaten mittels einer in den erhaltenen Nutzdaten enthaltenen Prüfsumme erfolgt.

7. Verfahren zur Verarbeitung von Nutzdaten gemäß Anspruch 6,
   **dadurch gekennzeichnet,**
   **daß** von den erhaltenen Nutzdaten diejenige Nutzdateneinheit mit dem schlechtesten ermittelten Softdecisionwerte korrigiert wird, wenn in der Prüfsumme ein Fehler auftritt.

8. Verfahren zur Verarbeitung von Nutzdaten gemäß Anspruch 7,
   **dadurch gekennzeichnet,**
   **daß** wenn in der Prüfsumme beim nochmaligen Überprüfen immer noch ein Fehler auftritt, diejenige Nutzdateneinheit mit dem zweitschlechtesten bzw. nächstschlechtesten ermittelten Softdecisionwert korrigiert wird.

9. Verfahren zur Verarbeitung von Nutzdaten gemäß einem der Ansprüche 6 bis 8,
   **dadurch gekennzeichnet,**
   **daß** der empfangene Teil der redundant codierten Nutzdaten ohne seine Prüfsumme decodiert wird, woraufhin seine Prüfsumme berechnet, mit dem entsprechenden Faltungscode codiert und mit der codierten Prüfsumme verglichen wird, um die Qualität der erhaltenen Nutzdaten zu überprüfen.

10. Verfahren zur Verarbeitung von Nutzdaten gemäß einem der vorhergehenden Ansprüche,
    **dadurch gekennzeichnet,**
    **daß** die von der Sendeeinheit der Empfangseinheit übertragenen Nutzdaten entsprechend dem GSM-Standard übertragen werden und mit einem zwei Erzeugungsgleichungen umfassenden Faltungscode codiert sind, wobei die erste Erzeugungsgleichung $c(2k) = u(k) + u(k-3) + u(k-4)$ und die zweite Erzeugungsgleichung $c(2k+1) = u(k)$

+ u(k-1) + u(k-3) + u(k-4) ist.

11. Vorrichtung zur Verarbeitung von durch eine Sendeeinheit an eine Empfangseinheit eines Mobiltelefons übertragenen Nutzdaten, die durch einen Faltungscode mit zumindest zwei Erzeugungsgleichungen redundant codiert sind, wobei die redundant codierten Nutzdaten sequentiell in Paketen übertragen werden, mit

- einer Empfangseinrichtung (2) zum Empfangen eines Teils einer Gesamtmenge von redundant codierten Nutzdaten, wobei im Fall einer fehlerfreien Übertragung aus dem empfangenen Teil alle zu übertragenden Nutzdaten erhalten werden können,
- einer Decodiereinrichtung (3) zum Decodieren des empfangenen Teils der redundant codierten Nutzdaten zum Erhalten aller zu übertragenden Nutzdaten, und
- einer Überprüfungseinrichtung (4) zum Überprüfen der Qualität der erhaltenen Nutzdaten, wobei eine Fehlerkorrektur durchgeführt wird, wenn die Qualität nicht ausreichend ist,

    **dadurch gekennzeichnet,**
    **daß** die Überprüfungseinrichtung (4) ein Signal an die Empfangseinrichtung (2) und/oder die Decodiereinrichtung (3) ausgibt, wenn aus dem empfangenen Teil der redundant codierten Nutzdaten alle zu übertragenden Nutzdaten in ausreichender Qualität erhalten wurden und der Empfang bzw. das Decodieren der restlichen Nutzdaten nicht mehr notwendig ist, und
    **daß** die Decodiereinrichtung (3) beim Decodieren des empfangenen Teils der redundant codierten Nutzdaten zunächst ein Teil der Nutzdaten durch Einsetzen des empfangenen Teils der redundant codierten Nutzdaten in die Erzeugergleichungen gewinnt, und die übrigen Nutzdaten durch Umstellen und rekursives Anwenden zumindest einer der Erzeugungsgleichungen mit dem bereits gewonnenen Teil der Nutzdaten erhält.

12. Vorrichtung zur Verarbeitung von Nutzdaten gemäß Anspruch 11,
    **dadurch gekennzeichnet,**
    **daß** die zu übertragenden Nutzdaten definierte Anfangs- und Endzustände aufweisen, und
    **daß** die Decodiereinrichtung (3) bei der rekursiven Anwendung der zumindest einen Erzeugungsgleichung beim Decodieren ausgehend vom Anfangszustand erste Softdecisionwerte ermittelt, die zu Korrektur wahrscheinlich fehlerhafter Nutzdaten verwendet werden, wenn die Qualität der erhaltenen Nutzdaten nicht ausreichend ist.

13. Vorrichtung zur Verarbeitung von Nutzdaten gemäß Anspruch 12,
    **dadurch gekennzeichnet,**
    **daß** die zu übertragenden Nutzdaten definierte Anfangs- und Endzustände aufweisen, und
    **daß** die Decodiereinrichtung (3) die gleiche Erzeugungsgleichung nochmals auf den empfangenen Teil der Nutzdaten ausgehend vom Endzustand rekursiv anwendet und dabei zweite Softdecisionwerte ermittelt, die sich jeweils entsprechenden ersten und zweiten Softdecisionwerte vergleicht und die jeweils wahrscheinlich richtigeren Nutzdaten auswählt.

14. Vorrichtung zur Verarbeitung von Nutzdaten gemäß Anspruch 11, 12 oder 13,
    **dadurch gekennzeichnet,**
    **daß** die zu übertragenden Nutzdaten definierte Anfangs- und Endzustände aufweisen, und daß, wenn die Qualität der erhaltenen Nutzdaten nicht ausreichend ist, die Decodiereinrichtung (3) zumindest einen Teil derjenigen der beim Decodieren erhaltenen Nutzdaten, die den definierten Anfangs- und/oder Endzuständen der zu übertragenden Nutzdaten entsprechen, mit den entsprechenden Anfangs- bzw. Endzuständen vergleicht, um ein Fehlermuster zu ermitteln, das zur Detektion und/oder Korrektur von Fehlern in den empfangenen codierten Nutzdaten verwendet wird.

15. Vorrichtung zur Verarbeitung von Nutzdaten gemäß Anspruch 14,
    **dadurch gekennzeichnet,**
    **daß** die Decodiereinrichtung (3) mit dem ermittelten Fehlermuster eine Untergruppe in den empfangenen codierten Nutzdaten feststellt, in der ein oder mehrere Fehler vorhanden sind, und zur Fehlerkorrektur in der Untergruppe diejenige Nutzdateneinheit mit dem schlechtesten ermittelten Softdecisionwert oder diejenigen Nutzdateneinheiten mit der schlechtesten ermittelten Softdecisionwertsumme korrigiert.

16. Vorrichtung zur Verarbeitung von Nutzdaten gemäß einem der Ansprüche 11 bis 15,
    **dadurch gekennzeichnet,**
    **daß** die Überprüfungseinrichtung (4) die Überprüfung der Qualität der erhaltenen Nutzdaten mittels einer in den erhaltenen Nutzdaten enthaltenen Prüfsumme durchführt.

17. Vorrichtung zur Verarbeitung von Nutzdaten gemäß Anspruch 16,
**dadurch gekennzeichnet,**
**daß** die Decodiereinrichtung (3) von den erhaltenen Nutzdaten diejenige Nutzdateneinheit mit dem schlechtesten ermittelten Softdecisionwerte korrigiert, wenn die Überprüfungseinrichtung in der Prüfsumme einen Fehler feststellt.

18. Vorrichtung zur Verarbeitung von Nutzdaten gemäß Anspruch 17,
**dadurch gekennzeichnet,**
**daß** wenn die Überprüfungseinrichtung (4) in der Prüfsumme beim nochmaligen Überprüfen immer noch einen Fehler feststellt, die Decodiereinrichtung diejenige Nutzdateneinheit mit dem zweitschlechtesten bzw. nächstschlechtesten ermittelten Softdecisionwert korrigiert.

19. Vorrichtung zur Verarbeitung von Nutzdaten gemäß einem der Ansprüche 16 bis 18,
**dadurch gekennzeichnet,**
**daß** die Decodiereinrichtung (3) den empfangenen Teil der redundant codierten Nutzdaten ohne seine Prüfsumme decodiert, seine Prüfsumme berechnet, mit dem entsprechenden Faltungscode codiert und mit der codierten Prüfsumme vergleicht, um die Qualität der erhaltenen Nutzdaten zu überprüfen.

20. Vorrichtung zur Verarbeitung von Nutzdaten gemäß einem der Ansprüche 11 bis 19,
**dadurch gekennzeichnet,**
**daß** die von der Sendeeinheit der Empfangseinheit übertragenen Nutzdaten entsprechend dem GSM-Standard übertragen werden und mit einem zwei Erzeugungsgleichungen umfassenden Faltungscode codiert sind, wobei die erste Erzeugungsgleichung $c(2k) = u(k) + u(k-3) + u(k-4)$ und die zweite Erzeugungsgleichung $c(2k+1) = u(k) + u(k-1) + u(k-3) + u(k-4)$ ist.

## Claims

1. Method for processing user data transmitted by a transmitting unit to a receiving unit of a mobile telephone, which data are redundantly coded by a convolutional code having at least two generation equations, and in which the redundantly coded user data are sequentially transmitted in packets, having the following steps:

   - receiving a part of a total set of redundantly coded user data, it being possible to obtain all user data to be transmitted from the received part in the case of an error-free transmission,
   - decoding the received part of the redundantly coded user data in order to obtain all user data to be transmitted,
   - checking the quality of the user data obtained, and
   - performing an error correction if the quality of the user data obtained is not adequate,

   **characterized in that** the method also exhibits the step of

   - suppressing the reception of further redundantly coded user data if the quality of the user data obtained is adequate, and

   that, during the decoding of the received part of the redundantly coded user data, first a part of the user data is obtained by inserting the received part of the redundantly coded user data into the generator equations, and the remaining user data are obtained by repositioning and recursively applying at least one of the generation equations with the part of the user data already obtained.

2. Method for processing user data according to Claim 1, **characterized in that** the user data to be transmitted have defined start and end states, and that during the recursive application of the at least one generation equation, first soft decision values are determined on the basis of the start state during the decoding, which soft decision values are used for correcting probably erroneous user data if the quality of the user data obtained is not adequate.

3. Method for processing user data according to Claim 2, **characterized in that** the user data to be transmitted have defined start and end states, and that the same generation equation is again recursively applied to the received part of the user data on the basis of the end state and during this process determines second soft decision values, and that the in each case corresponding first and second soft decision values are compared and the in each case probably more correct user data are selected.

4. Method for processing user data according to Claim 1, 2 or 3, **characterized in that** the user data to be transmitted have defined start and end states and that, if the quality of the user data obtained is not adequate, at least a part of the user data obtained in the decoding that correspond to the defined start and/or end states of the user data to be transmitted are compared with the corresponding start and end states, respectively, in order to determine an error pattern which is used for detecting and/or correcting errors in the received coded user data.

5. Method for processing user data according to Claim 4, **characterized in that** the error pattern determined specifies a subgroup of the received coded user data in which one or more errors are present and, for the purpose of error correction in the subgroup, the user data unit having the poorest determined soft decision value or the user data units having the poorest soft decision value sum are corrected.

6. Method for processing user data according to one of the preceding claims, **characterized in that** the quality of the user data obtained is checked by means of a check sum contained in the user data obtained.

7. Method for processing user data according to Claim 6, **characterized in that**, of the user data obtained, the user data unit having the poorest determined soft decision values is corrected if an error occurs in the check sum.

8. Method for processing user data according to Claim 7, **characterized in that** if an error still occurs in the check sum during the repeated checking, the user data unit having the second poorest or next poorest determined soft decision value is corrected.

9. Method for processing user data according to one of Claims 6 to 8, **characterized in that** the received part of the redundantly coded user data is decoded without its check sum whereupon its check sum is calculated, coded with the corresponding convolutional code and compared with the coded check sum in order to check the quality of the user data obtained.

10. Method for processing user data according to one of the preceding claims, **characterized in that** the user data transmitted by the transmitting unit of the receiving unit are transmitted in accordance with the GSM standard and are coded with a convolutional code comprising two generation equations, the first generation equation being $c(2k) = u(k) + u(k-3) + u(k-4)$ and the second generation equation being $c(2k+1) = u(k) + u(k-1) + u(k-3) + u(k-4)$.

11. Device for processing user data transmitted by a transmitting unit to a receiving unit of a mobile telephone, which data are redundantly coded by a convolutional code having at least two generation equations, the redundantly coded user data being transmitted sequentially in packets, comprising

   - a receiving device (2) for receiving a part of a total set of redundantly coded user data, wherein it is possible to obtain all user data to be transmitted from the received part in the case of an error-free transmission,
   - a decoding device (3) for decoding the received part of the redundantly coded user data in order to obtain all user data to be transmitted, and
   - a checking device (4) for checking the quality of the user data obtained, an error correction being performed if the quality is not adequate,

   **characterized in that**
   the checking device (4) outputs a signal to the receiving device (2) and/or the decoding device (3) if all user data to be transmitted are obtained in adequate quality from the received part of the redundantly coded user data and the reception and, respectively, decoding of the remaining user data is no longer necessary, and
   that the decoding device (3), during the decoding of the received part of the redundantly coded user data, first obtains a part of the user data by inserting the received part of the redundantly coded user data into the generator equations and obtains the remaining user data by repositioning and recursively applying at least one of the generation equations with the part of the user data already obtained.

12. Device for processing user data according to Claim 11, **characterized in that** the user data to be transmitted have defined start and end states, and that the decoding device (3), during the recursive application of the at least one generation equation during the decoding, determines first soft decision values on the basis of the start state, which soft decision values are used for correcting probably erroneous user data if the quality of the user data obtained is not adequate.

**13.** Device for processing user data according to Claim 12, **characterized in that** the user data to be transmitted have defined start and end states, and that the decoding device (3) again recursively applies the same generation equation to the received part of the user data on the basis of the end state and during this process determines second soft decision values, compares the in each case corresponding first and second soft decision values and selects the in each case probably more correct user data.

**14.** Device for processing user data according to Claim 11, 12 or 13, **characterized in that** the user data to be transmitted have defined start and end states and that, if the quality of the user data obtained is not adequate, the decoding device (3) compares at least a part of the user data obtained during the decoding which correspond to the defined start and/or end states of the user data to be transmitted with the corresponding start and end states, respectively, in order to determine an error pattern which is used for detecting and/or correcting errors in the received coded user data.

**15.** Device for processing user data according to Claim 14, **characterized in that** the decoding device (3) determines, by means of the error pattern determined, a subgroup in the received coded user data in which one or more errors are present and, for correcting errors in the subgroup, corrects the user data unit having the poorest determined soft decision value or the user data units having the poorest determined soft decision value sum.

**16.** Device for processing user data according to one of Claims 11 to 15, **characterized in that** the checking device (4) checks the quality of the user data obtained by means of a check sum contained in the user data obtained.

**17.** Device for processing user data according to Claim 16, **characterized in that** the decoding device (3) corrects, of the user data obtained, the user data unit having the poorest determined soft decision values if the checking device finds an error in the check sum.

**18.** Device for processing user data according to Claim 17, **characterized in that**, if the checking device (4) still finds an error in the check sum during the repeated check, the decoding device corrects the user data unit having the second poorest or next poorest determined soft decision value.

**19.** Device for processing user data according to one of Claims 16 to 18, **characterized in that** the decoding device (3) decodes the received part of the redundantly coded user data without its check sum, calculates its check sum, codes it with the corresponding convolutional code and compares it with the coded check sum in order to check the quality of the user data obtained.

**20.** Device for processing user data according to one of Claims 11 to 19, **characterized in that** the user data transmitted by the transmitting unit of the receiving unit are transmitted in accordance with the GSM standard and are coded with a convolutional code comprising two generation equations, the first generation equation being $c(2k) = u(k) + u(k-3) + u(k-4)$ and the second generation equation being $c(2k+1) = u(k) + u(k-1) + u(k-3) + u(k-4)$.

**Revendications**

**1.** Procédé pour le traitement de données utiles transmises par une unité émettrice à une unité réceptrice d'un téléphone mobile, qui sont codées de manière redondante par un code convolutif comportant au moins deux équations de génération, et dans lequel les données utiles codées de manière redondante sont transmises par paquets en mode séquentiel, comprenant les étapes de :

- réception d'une partie d'une quantité totale de données utiles codées de manière redondante, toutes les données utiles à transmettre pouvant être obtenues dans le cas d'une transmission exempte d'erreurs à partir de la partie reçue,
- décodage de la partie reçue des données utiles codées de manière redondante pour l'obtention de toutes les données utiles à transmettre,
- contrôle de la qualité des données utiles obtenues, et
- exécution d'une correction d'erreurs, si la qualité des données utiles obtenues est insuffisante,

**caractérisé en ce que** le procédé comporte en outre l'étape de

-    suppression de la réception d'autres données utiles codées de manière redondante, si la qualité des données utiles obtenues est suffisante,

et **en ce que** lors du décodage de la partie reçue des données utiles codées de manière redondante une partie des données utiles est d'abord obtenue en utilisant la partie reçue des données utiles codées de manière redondante dans les équations de génération, et les autres données utiles sont obtenues par modification et application récurrente d'au moins une des équations de génération avec la partie déjà obtenue des données utiles.

2.  Procédé pour le traitement de données utiles selon la revendication 1, **caractérisé en ce que** les données utiles à transmettre présentent des états initiaux et finaux définis, et
    **en ce que** lors de l'application récurrente de l'au moins une équation de génération de premières valeurs de décision pondérées sont déterminées lors du codage à partir de l'état initial, lesquelles sont utilisées pour la correction de données utiles probablement défectueuses, si la qualité des données utiles obtenues est insuffisante.

3.  Procédé pour le traitement de données utiles selon la revendication 2, **caractérisé en ce que** les données utiles à transmettre présentent des états initiaux et finaux définis, et
    **en ce que** la même équation de génération est à nouveau appliquée de manière récurrente sur la partie reçue des données utiles à partir de l'état terminal et que des secondes valeurs de décision pondérées sont déterminées, et **en ce que** les premières et secondes valeurs de décision pondérées correspondantes respectivement sont comparées et les données probablement plus correctes respectives sont sélectionnées.

4.  Procédé pour le traitement de données utiles selon les revendications 1, 2 ou 3, **caractérisé en ce que** les données utiles à transmettre présentent des états initiaux et finaux définis et **en ce que**, si la qualité des données utiles obtenues est insuffisante, au moins une partie des données utiles obtenues lors du décodage, qui correspondent aux états initiaux et/ou finaux définis des données utiles à transmettre, est comparée avec les états initiaux ou finaux correspondants, afin de déterminer une configuration des erreurs utilisée pour la détection et/ou la correction d'erreurs dans les données utiles codées reçues.

5.  Procédé pour le traitement de données utiles selon la revendication 4, **caractérisé en ce que** la configuration des erreurs déterminée indique un sous-groupe des données utiles codées reçues, dans lequel une ou plusieurs erreurs sont présentes, et que pour la correction des erreurs dans le sous-groupe l'unité de données utiles présentant la valeur de décision pondérée déterminée la plus mauvaise ou les unités de données utiles présentant le total de valeurs de décision le plus mauvais, sont corrigées.

6.  Procédé pour le traitement de données utiles selon l'une des revendications précédentes, **caractérisé en ce que** le contrôle de la qualité des données utiles obtenues s'effectue au moyen d'un total de contrôle contenu dans les données utiles obtenues.

7.  Procédé pour le traitement de données utiles selon la revendication 6, **caractérisé en ce que** parmi les données utiles obtenues l'unité de données utiles présentant les valeurs de décision pondérées déterminées les plus mauvaises est corrigée si une erreur se produit dans le total de contrôle.

8.  Procédé pour le traitement de données utiles selon la revendication 7, **caractérisé en ce que** si une erreur se produit toujours dans le total de contrôle après un nouveau contrôle, l'unité de données utiles présentant la valeur de décision flexible déterminée la deuxième plus mauvaise resp. la plus mauvaise la plus proche, est corrigée.

9.  Procédé pour le traitement de données utiles selon l'une des revendications 6 à 8, **caractérisé en ce que** la partie reçue des données utiles codées de manière redondante est décodée sans son total de contrôle, après quoi son total de contrôle est calculé, codé avec le code convolutif correspondant et comparé avec le total de contrôle codé, afin de vérifier la qualité des données utiles obtenues.

10. Procédé pour le traitement de données utiles selon l'une des revendications précédentes, **caractérisé en ce que** les données utiles transmises par l'unité émettrice de l'unité réceptrice sont transmises conformément à la norme GSM et codées avec un code convolutif comprenant deux équations de génération, la première équation de génération étant $c(2k) = u(k) + u(k-3) + u(k-4)$ et la deuxième équation de génération $c(2k+1) = u(k) + u(k-1) + u(k-3) + u(k-4)$.

11. Dispositif pour le traitement de données utiles transmises par une unité émettrice à une unité réceptrice d'un téléphone mobile, qui sont codées de manière redondante par un code convolutif comportant au moins deux équations de génération, les données utiles codées de manière redondante étant transmises par paquets en mode séquentiel, comportant

- un dispositif récepteur (2) pour la réception d'une partie d'une quantité totale de données utiles codées de manière redondante, toutes les données utiles à transmettre pouvant être obtenues en cas de transmission exempte d'erreurs à partir de la partie reçue,
- un dispositif de décodage (3) pour le décodage de la partie reçue des données utiles codées de manière redondante pour obtenir toutes les données utiles à transmettre, et
- un dispositif de contrôle (4) pour vérifier la qualité des données utiles obtenues, une correction d'erreurs étant effectuée si la qualité est insuffisante, **caractérisé en ce que** le dispositif de contrôle (4) émet un signal en direction de l'unité réceptrice (2) et/ou du dispositif de décodage (3), si toutes les données utiles à transmettre à partir de la partie reçue des données utiles codées de manière redondante ont été obtenues en une qualité suffisante et si la réception resp. le décodage des données utiles restantes n'est plus utile et

**en ce que** le dispositif de décodage (3) commence par obtenir une partie des données utiles en utilisant la partie reçue des données utiles codées de manière redondante dans les équations de génération lors du décodage de la partie reçue des données utiles codées de manière redondante, et **en ce qu'**on obtient des données utiles restantes en modifiant et en appliquant de manière récurrente au moins une des équations de génération avec la partie déjà obtenue des données utiles.

12. Procédé de traitement de données utiles selon la revendication 11, **caractérisé en ce que** les données utiles à transmettre présentent des états initiaux et finaux définis, et **en ce que** le dispositif de décodage (3) détermine de premières valeurs de décision pondérées lors de l'utilisation récurrente de l'au moins une équation de génération lors du décodage à partir de l'état initial, qui sont utilisées pour corriger des données utiles probablement erronées, si la qualité des données utiles obtenues est insuffisante.

13. Dispositif pour le traitement de données utiles selon la revendication 12, **caractérisé en ce que** les données utiles à transmettre présentent des états initiaux et finaux définis, et **en ce que** le dispositif de décodage (3) applique à nouveau de manière récurrente la même équation de génération à la partie reçue des données utiles à partir de l'état final et détermine à cette occasion des deuxièmes valeurs de décision pondérées, qui les comparent à chaque fois avec de premières et deuxièmes valeurs de décision pondérées correspondantes et qui sélectionne à chaque fois des données utiles probablement plus correctes.

14. Dispositif pour le traitement de données utiles selon les revendications 11, 12 ou 13, **caractérisé en ce que** les données utiles à transmettre présentent des états initiaux et finaux définis et **en ce que**, si la qualité des données utiles obtenues est insuffisante, le dispositif de décodage (3) compare avec les états initiaux resp. finaux correspondants au moins une partie des données utiles obtenues lors du décodage, qui correspondent aux états initiaux et/ou finaux définis des données utiles à transmettre, afin de déterminer une configuration des erreurs utilisée pour la détection et/ou la correction d'erreurs dans les données utiles codées reçues.

15. Dispositif pour le traitement de données utiles selon la revendication 14, **caractérisé en ce que** le dispositif de décodage (3) constate avec la configuration des erreurs déterminées un sous-groupe dans les données utiles codées reçues, dans lequel une ou plusieurs erreurs sont présentes, et, pour corriger les erreurs dans le sous-groupe, corrige l'unité de données utiles présentant la valeur de décision pondérée déterminée la plus mauvaise ou les unités de données utiles présentant le total de valeurs de décision pondérées déterminées le plus mauvais.

16. Dispositif pour le traitement de données utiles selon l'une des revendications 11 à 15, **caractérisé en ce que** le dispositif de contrôle (4) effectue le contrôle de la qualité des données utiles obtenues au moyen d'un total de contrôle contenu dans les données utiles obtenues.

17. Dispositif pour le traitement de données utiles selon la revendication 16, **caractérisé en ce que** le dispositif de décodage (3) corrige l'unité de données utiles parmi les données utiles obtenues comportant les valeurs de décision pondérées déterminées les plus mauvaises, si le dispositif de contrôle constate une erreur dans le total de contrôle.

18. Dispositif pour le traitement de données utiles selon la revendication 17, **caractérisé en ce que** si le dispositif de contrôle (4) constate toujours encore une erreur dans le total de contrôle lors d'un nouveau contrôle, le dispositif de décodage corrige l'unité de données utiles présentant la valeur de décision pondérée la deuxième plus mauvaise resp. la mauvaise suivante.

19. Dispositif pour le traitement de données utiles selon l'une des revendications 16 à 18, **caractérisé en ce que** le dispositif de décodage (3) décode la partie reçue des données utiles codées de manière redondante sans son total de contrôle, calcule son total de contrôle, le code avec le code convolutif correspondant et le compare avec le total de contrôle codé afin de vérifier la qualité des données utiles obtenues.

20. Dispositif pour le traitement de données utiles selon l'une des revendications 11 à 19, **caractérisé en ce que** les données utiles transmises par l'unité émettrice de l'unité réceptrice sont transmises conformément à la norme GSM et codées avec un code convolutif comprenant deux équations de génération, la première équation de génération étant c(2k) = u(k) + u(k-3) + u(k-4) et la deuxième équation de génération c(2k+1) = u(k) + u(k-1) + u(k-3) + u(k-4).

Fig 1